# EUROPÄISCHE PATENTSCHRIFT

(11) **EP 0 529 427 B1**
(45) Veröffentlichungstag und Bekanntmachung des Hinweises auf die Patenterteilung: **16.10.1996**
(21) Anmeldenummer: 92113804.6
(22) Anmeldetag: 13.08.1992
(51) Int. Cl.: B60D 1/44

(54) **Anhängevorrichtung mit Zugpendel**
Hitch coupling device with swinging draw bar
Dispositif d'attelage avec barre oscillante d'accouplement

(30) Priorität: 23.08.1991 DE 4127933
(43) Veröffentlichungstag der Anmeldung: 03.03.1993
(73) Patentinhaber: DEERE & COMPANY, Moline, Illinois 61265 (US)
(72) Erfinder: Thomas, Bernd, W-6733 Hassloch (DE)
(74) Vertreter: Feldmann, Bernhard

(56) Entgegenhaltungen:
- FR-A- 2 611 415
- GB-A- 900 930
- US-A- 2 582 595
- US-A- 3 116 076
- US-A- 3 292 950

## Beschreibung

Die Erfindung betrifft eine Anhängevorrichtung mit Zugpendel für ein angetriebenes Gerät, insbesondere für ein landwirtschaftliches oder Nutzfahrzeug, bei dem das Zugpendel hinsichtlich seiner Längsausrichtung relativ zum angetriebenen Gerät zwischen wenigstens zwei unterschiedlichen Arbeitslängen verschiebbar ist. Bei dem Zugpendel handelt es sich um eine Koppelstange, die hinten an einem Fahrzeug oder sonstigem angetriebenen Gerät angebracht ist und zur Anhängung anderer Geräte, zum Beispiel eines Anhängers oder eines Mähwerkes dient.

Eine in ihrer Längsrichtung verschiebbare Koppelstange für ein Kraftfahrzeug geht beispielsweise aus der DE-PS 492 300 hervor. Diese Koppelstange weist in Längsrichtung zueinander beabstandete Bohrungen auf, die sich wahlweise mit Bohrungen in Querstegen, die über Längsträger am Fahrgestell des Fahrzeuges befestigt sind, in fluchtende Stellung bringen lassen. Durch Einstecken eines Sperrbolzens durch die miteinander fluchtenden Bohrungen läßt sich die gewünschte, über das hintere Ende des Fahrzeuges hinausstehende Länge der Koppelstange einstellen.

Diese Art der in Längsrichtung wahlweise verstellbaren Befestigung der Koppelstange ist jedoch wegen der ausladend ausgebildeten Längsträger und Querstege in vielen Fällen nicht anwendbar. Beispielsweise befinden sich im hinteren Bereich eines Ackerschleppers im allgemeinen eine Vielzahl von Anhänge- und Montagevorrichtungen, wie Unterlenker und dergleichen, durch die das Raumangebot stark eingeschränkt ist. Längsträger und Querstege gemäß der in der DE-PS 492 300 angegebenen Art würden hier die Betätigung der Anhänge- und Montagevorrichtungen behindern oder unmöglich machen.

Die GB-A-900 930 beschreibt eine Anhängevorrichtung der eingangs genannten Art, bei der unterschiedliche Arbeitslängen des Zugpendels einstellbar sind, um eine Einstellung auf die Bedingungen verschiedener anhängbarer Geräte vornehmen zu können. Dies ist wünschenswert, da der Abstand zwischen Koppelpunkt und dem Zapfwellenende für unterschiedliche anhängbare Geräte unterschiedlich sein kann. Die unterschiedlichen Arbeitslängen sind durch ISO oder SAE genormt.

Wegen der beengten räumlichen Verhältnisse ist es üblich, das Zugpendel von unten an dem Fahrzeug, beispielsweise am Differentialgehäuse zu befestigen. Soll eine Verstellung des Abstandes zwischen Koppelpunkt und einem Zapfwellenende für verschiedene Zugpendelanwendungen erfolgen, so muß die Bedienungsperson eine Verschiebung des Zugpendels von der Schlepperunterseite aus vornehmen. Hierbei wird ein Festsetzbolzen gelöst, das Zugpendel in die gewünschte Lage verschoben und die gewünschte Arbeitslänge durch Abstecken des Bolzens in ein geeignetes Loch des Zugpendels manuell festgelegt. Diese Arbeit ist unbequem und erfordert relativ viel Zeit.

Der Einkoppelvorgang, bei dem die Bedienungsperson den Schlepper rückwärts an das anzuhängende Gerät heranfährt, ist schwierig, wenn der Koppelpunkt des Zugpendels sehr nahe hinter dem Schlepperheck liegt und vom Fahrersitz aus nicht einsehbar ist.

Durch die GB-A-2 208 583 ist eine um eine horizontale Achse vertikal verschwenkbare Anhängevorrichtung für einen Traktor bekannt geworden, bei dem in einem an dem Schlepper befestigbaren hohlen Führungsteil ein inneres Teil mit einem Anhängehaken teleskopartig derart verschiebbar ist, daß sich der Abstand zwischen Anhängehaken und Traktor einstellen läßt. Das innere Teil enthält zueinander beabstandete Quernuten, die unterschiedlichen Arbeitslängen zwischen Anhängehaken und Traktor entsprechen. An dem Führungsteil ist eine Klinke befestigt, die durch Federn gegen das innere Teil gedrückt wird und bei Erreichen einer Quernut automatisch in diese eingreift und das innere Teil mit dem Führungsteil verrastet. Die Klinke läßt sich durch einen vom Fahrersitz aus betätigbaren Hebel lösen, so daß die Verriegelung zwischen Führungsteil und innerem Teil aufgehoben wird. Die bekannte Anhängevorrichtung dient dem Anhängen von Anhängern. Sie stellt kein Zugpendel im eigentlichen Sinn dar. Ferner erlaubt es die Art der Verriegelung nicht, daß der Fahrer beim Kupplungsvorgang vom Fahrersitz aus jederzeit erkennen kann, ob die gewünschte Rastposition erreicht wurde.

Die US-A-3,292,950 beschreibt eine Verbindungsstange, die zweiteilig ausgebildet ist und eine an einem Zugpendel eines ziehenden Fahrzeugs befestigbare hohle Zugstange und eine teleskopartig von der ersten Zugstange aufgenommene zweite Zugstange enthält, an der das zu ziehende Gerät befestigbar ist. Die zweite Zugstange besteht aus einem oberen Stangenteil und einem unteren Stangenteil, die durch einen horizontalen Längsspalt voneinander getrennt sind und deren Enden miteinander starr verbunden sind. Auf den Stangenteilen ist eine Verriegelungsanordnung längs verschiebbar angeordnet, die einen die Stangenteile umfassenden rohrförmigen Kragen enthält. Um die Verriegelungsanordnung in Längsrichtung auf der weiten Zugstange festzulegen, sind längs der zweiten Zugstange senkrechte, zueinander beabstandete Bohrungen vorgesehen, die einer Bolzenverbindung mit der Verriegelungsanordnung dienen. Die Verriegelungsanordnung trägt zwei seitliche, gegen die Kraft einer Feder nach oben schwenkbare hakenförmige Verriegelungsplatten, die mit den vorstehenden Enden eines an der ersten Zugstange befestigten horizontalen Querbolzens zusammenwirken, um eine Verriegelung der zweiten Zugstange an der ersten Zugstange zu bewirken, sobald die zweite Zugstange in ihre Arbeitsposition verschoben wurde.

Die der Erfindung zugrunde liegende Aufgabe wird darin gesehen, eine Anhängevorrichtung mit Zugpendel der eingangs genannten Art anzugeben, durch die sich die genannten Probleme überwinden lassen. Sie soll eine einfache Einstellung unterschiedlicher Arbeitslängen erlauben, wobei der Koppelpunkt beim Einkuppelvorgang vom Fahrersitz aus bequem einsehbar sein soll. Insbesondere soll eine einfache und zeitsparende Handhabung beim Ankoppeln von Geräten ermöglicht werden.

Die Aufgabe wird erfindungsgemäß durch die Lehre des Patentanspruchs 1 gelöst und gemäß der Merkmale in den abhängigen Patentansprüchen in vorteilhafter Weise weiterentwickelt.

Die erfindungsgemäße Lösung ermöglicht es, daß zunächst das Zugpendel soweit nach hinten über das angetriebene Fahrzeug hinaus herausgezogen wird, daß es von dem Fahrersitz aus bequem sichtbar ist. Dann werden die Verriegelungsmittel an einer Position angebracht, die einer gewünschten Arbeitslänge entspricht. Die Bedienungsperson kann nun das Fahrzeug besteigen und dieses im Rückwärtsgang an das anzuhängende Gerät annähern. Dabei ist es ihr möglich, den Koppelpunkt zu beobachten. Nach dem Einkoppeln wird das angetriebene Fahrzeug weiter so weit nach hinten gefahren, bis die Verriegelungseinrichtung automatisch einrastet. Die Bedienungsperson braucht dabei keine besondere Sorgfalt aufzuwenden, um die richtige Arbeitslage einzustellen, da diese durch die Befestigungsposition der Rastmittel vorgegeben ist. Falls dies erforderlich ist, kann zur Entlastung der Verriegelungsvorrichtung das Zugpendel durch Einstecken eines Sicherungsbolzens bzw. einer geeigneten zusätzlichen formschlüssigen Sicherung gesichert werden.

Die erfindungsgemäße Lösung ermöglicht eine einfache und zeitsparende Handhabung des Zugpendels beim Ankoppeln von Geräten sowie bei der Verstellung des Abstandes zwischen Koppelpunkt und Zapfwellenende (Arbeitslänge) verschiedener Zugpendelanwendungen. Die Bedienungsperson kann die Verstellung der Arbeitslänge bequem am Geräteheck vornehmen. Dies erfolgt durch einfaches Umstecken der Verriegelungsmittel am Zugpendel. Der Koppelpunkt des Zugpendels liegt vor dem Ankoppeln im Sichtbereich der sich im Bedienungsstand befindlichen Bedienungsperson, so daß ein exaktes Heranfahren des angetriebenen Gerätes an das anzuhängende Gerät möglich ist. Damit wird der eigentliche Ankoppelvorgang erleichtert.

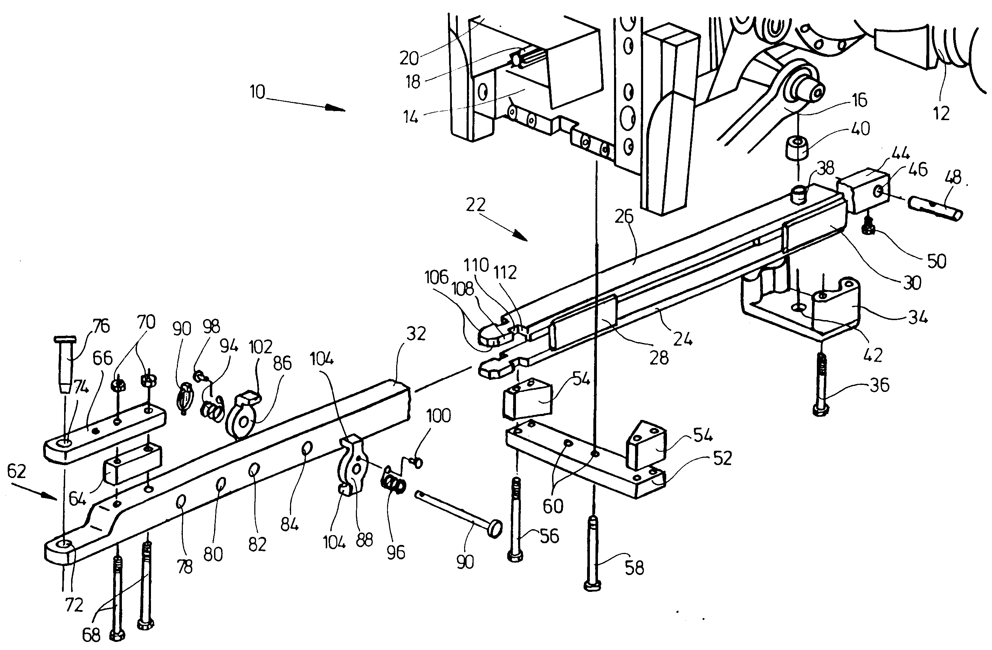

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Die einzige Figur ist eine perspektivische Darstellung und zeigt in ihrem oberen Bereich die Teilansicht eines Schlepperhecks 10 mit Achstrichter 12, Getriebegehäuse 14, Unterlenker 16, Zapfwellenstummel 18 und Zapfwellenschutzschild 20. Unter dem Schlepperheck 10 ist eine Kassette 22 dargestellt, welche im wesentlichen aus einer unteren Lasche 24, einer oberen Lasche 26 und vier Verbindungslaschen 28, 30 besteht. Die Verbindungslaschen 28, 30 sind im hinteren und vorderen Bereich der unteren und oberen Lasche 24, 26 mit diesen verschweißt, so daß sich eine weitgehend offene Kassette ergibt, in die das Zugpendel 32 in Längsrichtung gleitend einführbar ist. Durch die weitgehend offene Ausbildung können Verschmutzungsprobleme vermieden werden.

Der vordere Bereich der Kassette 22 stützt sich über ein im wesentlichen U-förmiges Tragteil 34 ab, das durch vier Schrauben 36, von denen lediglich eine dargestellt wurde, von unten am Getriebegehäuse 14 befestigbar ist. In diesem Bereich trägt die Kassette 22 einen nach oben und unten überstehenden Zapfen 38, der in entsprechende Ausnehmungen im Getriebegehäuse 14 und im Tragteil 34 eingreift und ein seitliches Verschwenken der Kassette 22 um die Achse des Zapfens 38 ermöglicht. Die Ausnehmung im Getriebegehäuse 14 wird durch eine in das Getriebegehäuse 14 eingepreßte Aufnahmehülse 40 gebildet. Die andere Ausnehmung 42 befindet sich im Basisschenkel des U-förmigen Tragteils 34.

Der hinsichtlich der Fahrzeugausrichtung hintere Teil der Kassette 22 wird unter Einhaltung eines vertikalen Spiels zum seitlichen Verschwenken der Kassette 22 durch ein Abstützteil 52 getragen. Das Abstützteil 52 wird über Distanzstücke 54 und mittels vier Schrauben 56, von denen lediglich eine dargestellt ist, von unten am Getriebegehäuse 14 befestigt. Die Distanzstücke 54 dienen gleichzeitig als Seitenanschläge für das Verschwenken der Kassette 22. Als Anschläge zur engeren Begrenzung einer seitlichen Schwenkbewegung der Kassette 22 lassen sich zwei weitere Schrauben 58, von denen wiederum lediglich eine dargestellt ist, durch mittlere Bohrungen 60 des Abstützteils 52 stecken und in das Getriebegehäuse 14 einschrauben.

Das Zugpendel 32 ist in zwei Teile gebrochen und in einer zur Kassette 22 fluchtenden Linie dargestellt. Der vordere Teil 44 des Zugpendels 32 weist eine Querbohrung 46 auf, in die ein beidseits überstehender Anschlagbolzen 48 einsteckbar ist. Zur Befestigung des Anschlagbolzens 48 ist eine Schraube 50 vorgesehen, die von unten durch eine Bohrung im vorderen Teil 44 des Zugpendels 32 steckbar und in eine Gewindebohrung im Anschlagbolzen 48 einschraubbar ist. Der Anschlagbolzen 48 verhindert, daß das Zugpendel 32 hinsichtlich der Fahrzeugausrichtung nach hinten aus der Kassette 22 herausgezogen werden kann. Dies bedeutet, daß das Zugpendel 32 lediglich bis zu einer maximalen Länge nach hinten verlängerbar ist.

Der Hauptteil des Zugpendels 32 trägt an seinem hinteren Ende ein Kupplungsmaul 62. Zur Ausbildung des Kupplungsmauls 62 werden ein Distanzstück 64 und eine Lasche 66 durch zwei Schrauben 68 und Muttern 70 an dem hinteren Ende des Zugpendels 32 befestigt. Zum Ankoppeln der Anhängeöse eines anzuhängenden Gerätes wird die nicht gezeigte Anhängeöse in den Bereich des Zugmauls 62 gebracht und durch einen in vertikale Bohrungen 72, 74 einsteckbaren Bolzen 76 gesichert.

Das Zugpendel 32 weist vier horizontal ausgerichtete Querbohrungen 78, 80, 82 und 84 auf. Die Abstände der Querbohrungen 78, 80, 82, 84 entsprechen den Differenzabständen zwischen den gewünschten Arbeitslängen, die vorzugsweise durch eine Normung vorgegeben sind. An den Querbohrungen 78, 80, 82, 84 lassen sich Rastmittel montieren.

Die Rastmittel bestehen im wesentlichen aus beidseits des Zugpendels 32 anlegbare Klauen 86, 88. Die Klauen 86, 88 haben jeweils eine mittige Bohrung, durch die ein Bolzen 90 gesteckt werden kann, um die Klauen 86, 88 wahlweise an einer der Querbohrungen 78, 80, 82, 84 des Zugpendels 32 zu montieren. Der Bolzen 90 läßt sich durch einen Klappstecker 92 sichern. Die Klauen 86, 88 werden im montierten Zustand durch jeweils eine Feder 94, 96 gegen das Zugpendel 32 gedrückt, lassen sich jedoch von Hand vom Zugpendel 32 wegdrücken. Die Federn 94, 96 weisen je eine Öse auf, die der Befestigung an der zugehörigen Klaue 86, 88 mittels einer Schraube 98, 100 dient. Diese Befestigung erleichtert die Montage der Rastmittel, da die Federn 94, 96 nunmehr unverlierbar mit den Klauen 86, 88 verbunden sind.

Jede der Klauen 86, 88 weist eine obere und eine untere Rastnase 102, 104 auf, die über der dem Zugpendel 32 zugewandten Anlagefläche der Klaue 86, 88 überstehen. Liegen die Klauen 86, 88 infolge der Federkraft an den seitlichen Zugpendeloberflächen an, so überdecken die Rastnasen 102, 104 teilweise die obere und untere Seitenfläche des Zugpendels 32. Die Klauen 86, 88 lassen sich von Hand gegen die Federkraft zurückziehen und um 90° gegenüber der in der Figur dargestellten Ausrichtung verdrehen. Läßt man die Klauen 86, 88 nun wieder los, so stützen sie sich über ihre Rastnasen 102, 104 an den seitlichen Flächen des Zugpendels 32 ab. Befinden sich die Klauen 86, 88 in dieser Lage, so ist eine Verrastung des Zugpendels 32 nicht möglich.

Die nach hinten weisenden Enden der oberen und unteren Kassettenlaschen 24, 26 weisen jeweils abgeschrägte Rampen 106 auf. An die Rampen 106 schließt sich ein paralleler Abschnitt 108 der Lasche 24, 26 an, der auf beiden Seiten der Lasche 24, 26 in eine rechteckige Quernut 110 übergeht. Im parallelen Abschnitt 108 ist die Breite der Lasche 24, 26 geringer als in dem auf der anderen Seite der Quernut 110 liegenden Abschnitt der Lasche 24, 26, so daß am vorderen Ende der Nut 110 ein vorstehender Anschlag 112 gegeben ist.

Wird das Zugpendel 32 mit in dargestellter Richtung montierten Klauen 86, 88, die mit ihren Rastnasen 102, 104 über die obere und untere Seitenfläche des Zugpendels 32 greifen, in die Kassette 22 eingeschoben, so drücken bei Erreichen der entsprechenden Position die Rampen 106 gegen die Rastnasen 102, 104 und bewegen die beiden Klauen 86, 88 gegen die Kraft der Federn 94, 96 voneinander weg. Erreichen die Rastnasen 102, 104 die Quernuten 110 der Kassettenlaschen 24, 26, so greifen die Rastnasen 102, 104 infolge der Kraft der Federn 94, 96 in die Quernuten 110 ein, und die Klauen 86, 88 bewegen sich aufeinander zu. Für den Fall, daß die Rastnasen 102, 104 nicht schnell genug in die Quernuten 110 einschnappen, stoßen die Rastnasen 102, 104 gegen die vorstehenden Anschläge 112, wodurch ein weiteres Einschieben des Zugpendels 32 in die Kassette 22 verhindert wird.

Die Handhabung des erfindungsgemäßen Zugpendels 32 ist sehr einfach. Zunächst wird das Zugpendel 32 soweit aus der Kassette 22 herausgezogen, bis der Anschlagbolzen 48 gegen das vordere Ende der Kassette 22 stößt und die Bewegung begrenzt. Bei maximal ausgezogenem Zugpendel 32 ist die Beobachtung des Koppelpunktes am Koppelmaul 62 von der Fahrzeugkabine aus ohne Schwierigkeiten möglich. Nun werden die gewünschten Arbeitslängen des Zugpendels 32 ermittelt und die Klauen 86, 88 über den Bolzen 90 an der gewünschten Querbohrung 78, 80, 82, 84 des Zugpendels 32 befestigt. Zur Versetzung der Klauen 86, 88 wird der Klappstecker 92 aus dem Bolzen 90 entfernt und der Bolzen 90 aus der Feder 94, der Klaue 86 und der Querbohrung 78, 80, 82, 84 im Zugpendel 32 gezogen. In umgekehrter Reihenfolge erfolgt die Befestigung an einer anderen Querbohrung 78, 80, 82, 84.

Soll die Zugpendelposition nicht geändert werden, so genügt es vor dem Herausziehen des Zugpendels 32, die beiden Klauen 86, 88 gegen den Federdruck der Feder 94 mit beiden Händen auseinander zu ziehen und durch gleichzeitiges Ziehen nach hinten aus dem Bereich der entsprechenden Querbohrung 78, 80, 82, 84 zu bringen und die Verriegelung zu lösen. Eine andere Möglichkeit zur Entriegelung besteht darin, zunächst eine der Klauen 86 gegen den Federdruck der Feder 94 zu ziehen und dabei um 90° zu drehen und mit ihren Nasen 104 auf der Zugpendelseitenfläche abzusetzen. Anschließend wird der Vorgang für die andere Klaue 88 analog wiederholt. Damit ist die Entriegelung gelöst, ohne eine Längsverschiebung des Zugpendels 32 vornehmen zu müssen, was bei angehängtem Gerät zur Positionsänderung des Zugpendels 32 nötig werden kann.

Nach Einstellen einer Zugpendelposition kann die Bedienungsperson unter Beobachtung des Koppelpunktes das Fahrzeug zurückfahren und das Koppelmaul 62 so in fluchtende Stellung mit der Anhängeöse des anzuhängenden Gerätes bringen, daß eine Koppelung durch Einstecken des Bolzens 76 möglich ist. Durch weiteres Zurückfahren des Schleppers wird das Zugpendel 32 in die Kassette 22 hineingeschoben, bis die Klauen 86, 88 die Rampen 106 erreichen, von dieser auseinander gedrückt werden und in den Quernuten 110 automatisch verrasten. Nun ist eine Verschiebung des Zugpendels 32 weder vor noch zurück moglich. Der Ankoppelvorgang ist beendet.

Um die Klauen-Quernuten-Verbindung in ihrer Position zu sichern, kann es zweckmäßig und aus Sicherheitsgründen auch erforderlich sein, eine nicht dargestellte Sicherungseinrichtung anzubringen, durch die nach der Verriegelung, die durch die Klauen 86, 88 und die Nuten 110 erfolgt, die Klauen 86, 88 daran gehindert werden, gegen den Federdruck der Feder 94, 96 aus den Nuten 110 zu wandern. Dies kann durch einen zusätzlichen, nicht dargestellten Klappstecker, eine Klammereinrichtung oder dergleichen erfolgen.

Auch wenn die Erfindung lediglich anhand eines Ausführungsbeispieles beschrieben wurde, erschließen sich für den Fachmann im Lichte der vorstehenden Beschreibung viele verschiedenartige Alternativen, Modifikationen und Varianten, die unter die vorliegende Erfindung fallen.

## Patentansprüche

1. Anhängevorrichtung mit Zugpendel (32) für ein angetriebenes Gerät, insbesondere für ein landwirtschaftliches Fahrzeug oder ein anderes Nutzfahrzeug, bei dem das Zugpendel (32) hinsichtlich seiner Längsausrichtung relativ zum angetriebenen Gerät zwischen wenigstens zwei unterschiedlichen Arbeitslängen verschiebbar ist, dadurch gekennzeichnet, daß Verriegelungsmittel (86, 88, 110) vorgesehen sind, die beim Längsverschieben des Zugpendels (32) eine automatische Verriegelung bei Erreichen einer Arbeitslänge vornehmen, und daß die Verriegelungsmittel (86, 88, 110) Rastmittel (86, 88) enthalten, die wahlweise an Positionen (78, 80, 82, 84), die den unterschiedlichen Arbeitslängen entsprechen, an dem Zugpendel (32) befestigbar sind.

2. Anhängevorrichtung nach Anspruch 1, dadurch gekennzeichnet, daß die Rastmittel einfach umsteckbare Bauteile (86, 88, 94, 96, 90) enthalten und daß am angetriebenen Gerät wenigstens eine Ausnehmung (110) vorgesehen ist, in die die an dem Zugpendel (32) befestigbaren Rastmittel (86, 88) einrastbar sind.

3. Anhängevorrichtung nach Anspruch 1 oder 2, dadurch gekennzeichnet, daß als Rastmittel wenigstens eine am Zugpendel (32) federnd befestigbare Klaue (86, 88) dient, die mit wenigstens einer Nase (102, 104) bei Erreichen der eingestellten Arbeitslänge in eine am angetriebenen Gerät vorgesehene Ausnehmung (110) eingreift.

4. Anhängevorrichtung nach einem der Ansprüche 1 bis 3, dadurch gekennzeichnet, daß das Zugpendel (32) quer verlaufende Durchgangsbohrungen (78, 80, 82, 84) aufweist, deren Positionen den Arbeitslängen entsprechen, und daß ein Bolzen (90) in die Durchgangsbohrungen (78, 80, 82, 84) einsteckbar ist, der wenigstens eine auf einer Seite des Zugpendels (32) angeordnete Klaue (86, 88) und wenigstens eine Feder (94, 96) derart aufnimmt, daß die Klaue (86, 88) durch die Federkraft in Richtung Zugpendel (32) gedrückt wird.

5. Anhängevorrichtung nach Anspruch 4, dadurch gekennzeichnet, daß die Klaue (86, 88) auf dem Bolzen (90) verdrehbar angeordnet ist und daß die Klaue (86, 88) wenigstens eine in Richtung Zugpendel (32) weisende Rastnase (102, 104) aufweist, die bei einer bestimmten Drehlage über die dem Zugpendel (32) zugewandte Anlagefläche der Klaue (86, 88) übersteht.

6. Anhängevorrichtung nach einem der Ansprüche 1 bis 5, dadurch gekennzeichnet, daß das Zugpendel (32) längsverschiebbar in einer am angetriebenen Gerät festgelegten Kassette (22) geführt ist und daß die sich im wesentlichen in Längsrichtung des Gerätes erstreckende Kassette (22) über eine vertikale Schwenkachse (38) mit dem angetriebenen Gerät verbunden ist.

7. Anhängevorrichtung nach Anspruch 6, dadurch gekennzeichnet, daß die Kassette (22) wenigstens eine in Zugpendelrichtung ausgerichtete Lasche (24, 26) enthält, die im Bereich ihres zur Gerätehinterseite weisenden Endes wenigstens eine im wesentlichen als seitliche Quernut (110) ausgebildete Ausnehmung (110) aufweist, in die am Zugpendel (32) befestigte Rastmittel (86, 88) verrastend eingreifen können, und daß das Ende der Lasche (24, 26) wenigstens auf einer Seite eine abgeschrägte Rampe (106) aufweist, durch die beim Verschieben des Zugpendels (32) die mit dem Zugpendel (32) verbundenen Rastmittel (86, 88) gespreizt werden.

8. Anhängevorrichtung nach Anspruch 7, dadurch gekennzeichnet, daß die Lasche (24, 26) im Bereich zwischen ihrem Ende und der Quernut (110) schmaler ausgebildet ist, als im sich an die Quernut (110) anschließenden Bereich, so daß sich ein vorstehender Anschlag (112) für das Rastmittel (86, 88) ergibt.

9. Anhängevorrichtung nach einem der Ansprüche 6 bis 8, dadurch gekennzeichnet, daß die Kassette (22) aus zwei sich zueinander parallel erstreckenden und durch Verbindungselemente (28, 30) miteinander verbundenen Laschen (24, 26) gebildet ist und daß jede Lasche (24, 26) im Bereich ihres zur Geräterückseite weisenden Endes zwei sich gegenüberliegende Nuten (110) aufweist.

10. Anhängevorrichtung nach einem der Ansprüche 1 bis 9, dadurch gekennzeichnet, daß am zur Gerätevorderseite weisenden Ende des Zugpendels (32) dieses einen Querbolzen (48) trägt, der als Anschlag dient und ein völliges Herausziehen des Zugpendels (32) verhindert.

11. Anhängevorrichtung nach einem der Ansprüche 1 bis 10, dadurch gekennzeichnet, daß ein Sicherungselement vorgesehen ist, durch das das Zugpendel (32) formschlüssig mit einem am angetriebenen Gerät befestigten Teil verbindbar ist.

## Claims

1. Hitch coupling device with a swinging drawbar (32) for a driven implement, especially for an agricultural or utility vehicle, in which the swinging drawbar (32) is displaceable in terms of its longitudinal extension relative to the driven implement between at least two different working lengths, characterised in that locking means (86, 88, 110) are provided which, upon longitudinal displacement of the swinging drawbar (32), undertake an automatic locking upon reaching a working length, and in that the locking means (86, 88, 110) include engagement means (86, 88) which are selectively attachable on the swinging drawbar (32) at positions (78, 80, 82, 84) which correspond to the various working lengths.

2. Hitch coupling device according to claim 1, characterised in that the engagement means include simply shiftable components (86, 88, 94, 96, 90), and in that there is provided on the driven implement at least one recess (110) into which the engagement means (86, 88), attachable to the swinging drawbar (32), may be engaged.

3. Hitch coupling device according to claim 1 or 2, characterised in that there serve as engagement means at least one claw (86, 88) resiliently attachable to the swinging drawbar (32), said claw engaging, with at least one nose (102, 104), in a recess (110) provided on the driven implement, upon reaching the set working length.

4. Hitch coupling device according to one of claims 1 to 3, characterised in that the swinging drawbar (32) has transversely-extending continuous bores (78, 80, 82, 84) whose positions correspond to the working lengths, and in that a bolt (90) may be inserted into the continuous bores (78, 80, 82, 84), said bolt accommodating at least one claw (86, 88) disposed on one side of the swinging drawbar (32) and at least one spring (94, 96), in such a way that the claw (86, 88) is pressed by the spring force in the direction of the swinging drawbar (32).

5. Hitch coupling device according to claim 4, characterised in that the claw (86, 88) is mounted to rotate on the bolt (90), and in that the claw (86, 88) has at least one engagement nose (102, 104) facing in the direction of the swinging drawbar (32), said engagement nose, at a specific rotational position, projecting beyond the contact surface of the claw (86, 88) facing the swinging drawbar (32).

6. Hitch coupling device according to one of claims 1 to 5, characterised in that the swinging drawbar (32) is guided in a longitudinally movable manner in a cage (22) secured to the driven implement, and in that the cage (22), extending substantially in the longitudinal direction of the implement, is connected by a vertical pivoting axis (38) to the driven implement.

7. Hitch coupling device according to claim 6, characterised in that the cage (22) includes a bracket (24, 26) aligned in the direction of the swinging drawbar (32), said bracket, in the region of its end facing the rear of the implement, having at least one recess (110) substantially designed as a lateral transverse groove (110), into which engagement means (86, 88) attached to the swinging drawbar (32) can resiliently engage, and in that the end of the bracket (24, 26) has, at least on one side, an inclined ramp (106) by means of which the engagement means (86, 88) connected to the swinging drawbar (32) are spread apart upon displacement of the swinging drawbar (32).

8. Hitch coupling device according to claim 7, characterised in that the bracket (24, 26) is narrower in design between its end and the transverse groove (110) than in the region connecting with the transverse groove (110), so that a projecting stop means (112) results for the engagement means (86, 88).

9. Hitch coupling device according to one of claims 6 to 8, characterised in that the cage (22) is formed by brackets (24, 26) extending parallel to one another and interconnected by connecting links (28, 30), and in that each bracket (24, 26) has, in the region of its end facing the rear of the implement, two mutually-opposed grooves (110).

10. Hitch coupling device according to one of claims 1 to 9, characterised in that, at the end of the swinging drawbar (32) facing the front side of the implement, said swinging drawbar (32) carries a transverse bolt (48) which serves as a stop means and prevents complete withdrawal of the swinging drawbar (32).

11. Hitch coupling device according to one of claims 1 to 10, characterised in that a securing member is provided by means of which the swinging drawbar (32) is connectable in a positively-locking manner to a part secured to the driven implement.

## Revendications

1. Dispositif d'attelage comportant une barre oscillante d'accouplement (32) pour un appareil tracté, notamment pour un véhicule agricole ou un autre véhicule utilitaire, dans lequel la barre oscillante d'accouplement (32) est déplaçable, en rapport avec son orientation longitudinale par rapport à l'appareil tracté, entre au moins deux longueurs de travail différentes, caractérisé en ce que sont prévus des moyens de verrouillage (86,88,110), qui lors du déplacement longitudinal de la barre oscillante d'accouplement (32), exécutent un verrouillage automatique lorsqu'une longueur de travail est atteinte, et que les moyens de verrouillage (86,88,110) contiennent des moyens d'encliquetage (86,88), qui peuvent être fixés sur la barre oscillante d'accouplement (32) au choix dans des positions (78,80,82,84), qui correspondent aux différentes longueurs de travail.

2. Dispositif d'attelage selon la revendication 1, caractérisé en ce que les moyens d'encliquetage contiennent simplement des modules enfichables (86,88,94,96,90), et sur l'appareil tracté est prévu au moins un évidement (110), dans lequel peuvent s'encliqueter les moyens d'encliquetage (86,88), qui peuvent être fixés à la barre oscillante d'accouplement (32).

3. Dispositif d'attelage selon la revendication 1 ou 2, caractérisé en ce qu'il est prévu, comme moyens d'encliquetage, au moins une griffe (86,88), qui peut être fixée élastiquement à la barre oscillante d'accouplement (32) et qui s'engage, par au moins un ergot (102,104), lorsque la longueur de travail réglée est atteinte, dans un évidement (110) prévu sur l'appareil tracté.

4. Dispositif d'attelage selon l'une des revendications 1 à 3, caractérisé en ce que la barre oscillante d'accouplement (32) comporte des perçages traversants transversaux (78,80,82,84), dont les positions correspondent aux longueurs de travail, et que dans les perçages traversants (78,80,82,84) peut être enfichée une goupille (90), qui reçoit au moins une griffe (86,88), disposée d'un côté de la barre oscillante d'accouplement (82), et au moins un ressort (94,96) de telle sorte que la griffe (86,88) est repoussée par la force du ressort en direction de la barre oscillante d'accouplement (32).

5. Dispositif d'attelage selon la revendication 4, caractérisé en ce que la griffe (86,88) est disposée de manière à pouvoir tourner sur la goupille (90) et que la griffe (86,88) possède au moins un ergot d'encliquetage (102,104), qui est dirigé vers la barre oscillante d'accouplement (32) et qui, pour une position en rotation déterminée, fait saillie par rapport à la surface d'application de la griffe (86,88), tournée vers la barre oscillante d'accouplement (32).

6. Dispositif d'attelage selon l'une des revendications 1 à 5, caractérisé en ce que la barre oscillante d'accouplement (32) est guidée de manière à être déplaçable longitudinalement, dans une cassette (22) fixée sur l'appareil tracté, et que la cassette (22), qui s'étend essentiellement dans la direction longitudinale de l'appareil, est reliée à l'appareil tracté, par l'intermédiaire d'un axe vertical de pivotement (38).

7. Dispositif d'attelage selon la revendication 6, caractérisé en ce que la cassette (22) contient au moins une patte (24,26) orientée dans la direction d'oscillation de traction et qui comporte, dans la zone de son extrémité tournée vers le côté arrière de l'appareil, au moins un évidement (110) agencé essentiellement sous la forme d'une rainure latérale transversale (110), dans laquelle peuvent s'engager avec encliquetage des moyens d'encliquetage (86,88) fixés à la barre oscillante d'accouplement (32), et que l'extrémité de la patte (24,26) possède, au moins d'un côté, une rampe en biseau (106), par laquelle les moyens d'encliquetage (86,88), qui sont reliés à la barre oscillante d'accouplement (32), sont écartés lors du déplacement de la barre oscillante d'accouplement (32).

8. Dispositif d'attelage selon la revendication 7, caractérisé en ce que la patte (24,26) est agencée en étant plus étroite dans la zone comprise entre son extrémité et la rainure transversale (110) que dans la zone, qui se raccorde à la rainure transversale (110), de sorte qu'on obtient une butée saillante (112) pour les moyens d'encliquetage (86,88).

9. Dispositif d'attelage selon l'une des revendications 6 à 8, caractérisé en ce que la cassette (22) est formée par deux pattes (24,26), qui sont parallèles et reliées entre elles par des éléments de liaison (28,30) et que chaque patte (24,26) possède, dans la zone de son extrémité, tournée vers le côté arrière de l'appareil, des rainures (110) à l'opposé l'une à l'autre.

10. Dispositif d'attelage selon l'une des revendications 1 à 9, caractérisé en ce que sur l'extrémité de la barre oscillante d'accouplement (32), qui est tournée vers le côté avant de l'appareil, cette barre porte une goupille transversale (48), qui sert de butée et empêche une extraction complète de la barre oscillante d'accouplement (32).

11. Dispositif d'attelage selon l'une des revendications 1 à 10, caractérisé en ce qu'il est prévu un élément de sécurité, grâce auquel la barre oscillante d'accouplement (32) peut être reliée, selon une liaison par formes complémentaires, à une partie fixée sur l'appareil tracté.
